# EUROPEAN PATENT SPECIFICATION

(11) **EP 1 664 171 B1**
(45) Date of publication and mention of the grant of the patent: **17.10.2007**
(21) Application number: 04783396.7
(22) Date of filing: 03.09.2004
(51) Int. Cl.: C08K 3/22, H01B 3/00

(54) **FLAME RETARDANT COMPOSITION WITH EXCELLENT PROCESSABILITY**
FLAMMWIDRIGE ZUSAMMENSETZUNG MIT HERVORRAGENDER VERARBEITBARKEIT
COMPOSITION ININFLAMMABLE AVEC UNE EXCELLENTE TRANSFORMABILITE

(30) Priority: 05.09.2003 US 500600 P
(43) Date of publication of application: 07.06.2006
(73) Proprietor: UNION CARBIDE CHEMICALS & PLASTICS TECHNOLOGY CORPORATION, Danbury, Connecticut 06817-0001 (US)
(72) Inventor: COGEN Jeffrey, M., Flemington, NJ 08822 (US); JOW, Jinder, Singapore 259959 (SG); WHALEY, Paul, D., Hillsborough, NJ 08844 (US)
(74) Representative: Hayes, Adrian Chetwynd
(86) International application number: PCT/US2004/029125
(87) International publication number: WO 2005/023924

(56) References cited:
- EP-A- 0 628 620
- US-A- 5 218 027
- US-A- 6 025 422

## Description

This invention relates to a flame-retardant composition that is useful for wire-and-cable applications. This invention also relates to wire-and-cable constructions made from the flame-retardant composition. Moreover, the flame retardant composition of this invention is generally useful for applications requiring flame retardancy such as extruded or thermoformed sheets, injection-molded articles, coated fabrics, construction materials (for example, roofing membranes and wall coverings), and automotive materials.

Generally, cables must be flame retardant for use in enclosed spaces, such as automobiles, ships, buildings, and industrial plants. Flame-retardant performance of the cable is often achieved by making the cable insulation or outer jacket from a blend of flame-retardant additives and polymeric materials.

Examples of flame-retardant additives and mechanisms for their use with polymers are described in Menachem Lewis & Edward D. Weil, Mechanisms and Modes of Action in Flame Retardancy of Polymers, in FIRE RETARDANT MATERIALS 31-68 (A.R Horrocks & D. Price eds., 2001) and Edward D. Weil, Synergists, Adjuvants, and Antagonists in Flame-Retardant Systems, in FIRE RETARDANCY OF POLYMERIC MATERIALS 115-145 (A. Grand and C. Wilke eds., 2000).

Flame-retardant additives for use in polyolefin-based compositions include metal hydrates and halogenated compounds. Useful metal hydrates include magnesium hydroxide and aluminum trihydroxide, and useful halogenated compounds include decabromodiphenyloxide.

Because the quantity of a flame-retardant additive in a polyolefin-based composition can directly affect the composition's flame-retardant performance, it is often necessary to use high levels of flame retardant additives in the composition. For example, a wire-and-cable composition may contain as much as 75 percent by weight of inorganic fillers or 25 percent by weight of halogenated additives. Unfortunately, the use of high levels of flame-retardant additives can be expensive and degrade processing of the composition as well as degrade the insulating or jacketing layer's electrical, physical, and mechanical properties. Accordingly, it may be necessary to balance flame retardant performance against cost, processing characteristics, and other properties. Notably, high levels of metal hydrates can significantly and adversely affect viscosity of the composition, thereby limiting the useful levels of metal hydrates.

Examples of references that disclose the use of metal hydrates in polyethylene-based compositions include United States Patent Serial Nos. 5,317,051, 5,707,732, and 5,889,087. None of these references adequately addresses the problem of processability while increasing the concentration of metal hydrates and retaining desirable mechanical properties.

Notably, United States Patent Serial No. 5,317,051 discloses compositions comprising (a) polyolefin resin, (b) a polyolefin modified with an unsaturated carboxylic acid, (c) a flame retardant, and (d) a whitening preventing agent. The whitening agents are selected from the group consisting of (1) a mineral oil, a wax, or a paraffin, (2) a higher fatty acid or an ester, amide or metallic salt thereof, (3) a silicone, (4) a partial fatty ester of a polyhydric alcohol or aliphatic alcohol-, fatty acid-, aliphatic amino-, fatty acid amide-, alkylphenol-, or alkylnaphthol- ethylene oxide adduct, and (5) a fluoric elastomer. The applicants disclosed silicone oils, silicone oligomers, silicone rubbers, and silicone resins as examples of a silicone for use in their invention. Silicone oils modified with higher fatty acids were identified as most preferred.

United States Patent Serial No. 5,707,732 discloses compositions comprising (a) blends of ethylene polymers, wherein one of the polymers is modified with an unsaturated aliphatic diacid anhydride, and (b) a metal hydrate. The patent further disclosed a list of conventional additives, which may be useful with the claimed compositions.

United States Patent Serial No. 5,889,087 describes compositions comprising (a) a blend of ethylene polymers, wherein one of the ethylene polymers is modified with an organo-functional group, (b) an inorganic flame retardant, and (c) a silicone oil. The viscosity of the silicone oil can be in the range of 0.65 to 1,000,000 centistokes at 25 degrees Celsius, and is preferably in the range of 5,000 to 100,000 centistokes, and most preferably in the range of 10,000 to 100,000 centistokes. The applicants do not teach any benefit to be achieved from the use of high molecular weight polysiloxanes.

The patentee of European Patent Serial No. 1 116 244 B1 highlighted the processability problems associated with polymeric compositions made from or containing ethylene polymers and metal hydrates, wherein some of the ethylene polymers contain unsaturated aliphatic diacid anhydrides. When contrasting the effect of hydrolyzable silane groups against the effect of unsaturated aliphatic diacid anhydrides, the patentee observed that the hydrolyzable silane groups facilitated desirable mechanical properties of the polymer composition and compatibilization of the natural filler with the polymer matrix. Moreover, the patentee noted that unsaturated aliphatic diacid anhydrides adversely affected the processability of the polymeric composition (that is, an undesirable increase of viscosity in the molten polymer mixture). Rather than address problems with ethylene polymers containing unsaturated aliphatic diacid anhydrides, the patentee focused on polymers containing hydrolyzable silane groups.

US-B-5,218,027 discloses a fire retardant composition comprising: (a) 5% to 60% by weight of an olefinic copolymer wherein 3% to 20% by weight of said copolymer is a carboxylic acid comonomer; said copolymer being selected from the group consisting of a copolymer of ethylene and ethylene acrylic acid and a copolymer of ethylene and methacrylic acid; (b) 1% to 15% by weight of an organopolysiloxane; and (c) 20% to 85% by weight of a flame retardant additive comprising group I, group II or group III metal oxide hydrate.

US-B-6,025,422 discloses a polymeric composition having flame retardant properties which comprises a hydrated inorganic filler and a polymer blend comprising a polymerization or copolymerization product of one or more ethylenically unsaturated monomers, said polymer blend further comprising an aliphatic polyketone.

A polymeric composition, having desirable processing characteristics and cost advantages over conventional compositions while retaining desirable flame retardant performance, is needed.

The invented flame retardant composition comprises (a) a first ethylene polymer having a density less than 0.90 grams/cubic-centimeter and a polydispersity index less than 3; (b)a second ethylene polymer having a density less than 0.95 grams/cubic centimeter and being modified with an unsaturated aliphatic diacid anhydride; (c) a flame retardant; and (d) an ultra high molecular weight polysiloxane.

The first ethylene polymer, as that term is used herein, is a homopolymer of ethylene or a copolymer of ethylene and a minor proportion of one or more alpha-olefins having 3 to 12 carbon atoms, and preferably 4 to 8 carbon atoms, and, optionally, a diene, or a mixture of blend of such homopolymers and copolymers. The mixture can be a mechanical blend or an in situ blend. Examples of the alpha-olefins are propylene, 1-butene, 1-hexene, 4-methyl-1-pentene, and 1-octene. Additionally, the first ethylene polymer can be a copolymer of ethylene and an unsaturated ester such as a vinyl ester (for example, vinyl acetate or an acrylic or methacrylic acid ester) or a copolymer of ethylene and a vinyl silane (for example, vinyltrimethoxysilane and vinyltriethoxysilane).

The first ethylene polymer has a density less than 0.90 gram per cubic centimeter.

The ethylene polymers also can have a melt index in the range of 0.1 to 50 grams per 10 minutes. If the ethylene polymer is a homopolymer, its melt index is preferably in the range of 0.75 to 3 grams per 10 minutes. Melt index is determined under ASTM D-1238, Condition E and measured at 190 degrees Celsius and 2160 grams.

The copolymers of the first ethylene polymer comprised of ethylene and unsaturated esters are well known and can be prepared by conventional high-pressure techniques. The unsaturated esters can be alkyl acrylates, alkyl methacrylates, or vinyl carboxylates. The alkyl groups can have 1 to 8 carbon atoms and preferably have 1 to 4 carbon atoms. The carboxylate groups can have 2 to 8 carbon atoms and preferably have 2 to 5 carbon atoms. The portion of the copolymer attributed to the ester comonomer can be in the range of 5 to 50 percent by weight based on the weight of the copolymer, and is preferably in the range of 15 to 40 percent by weight. Examples of the acrylates and methacrylates are ethyl acrylate, methyl acrylate, methyl methacrylate, t-butyl acrylate, n-butyl acrylate, n-butyl methacrylate, and 2-ethylhexyl acrylate. Examples of the vinyl carboxylates are vinyl acetate, vinyl propionate, and vinyl butanoate. The melt index of the ethylene/unsaturated ester copolymers can be in the range of 0.5 to 50 grams per 10 minutes, and is preferably in the range of 2 to 25 grams per 10 minutes.

The copolymers of the first ethylene polymer comprised of ethylene and vinyl silanes are also well known. Examples of suitable silanes are vinyltrimethoxysilane and vinyltriethoxysilane. Such polymers are typically made using a high-pressure process. Use of such ethylene vinylsilane copolymers is desirable when a moisture crosslinkable composition is desired. Optionally, a moisture crosslinkable composition can be obtained by using an ethylene polymer grafted with a vinylsilane in the presence of a free radical initiator. When a silane-containing ethylene polymer is used, it may also be desirable to include a crosslinking catalyst in the formulation (such as dibutyltindilaurate or dodecylbenzenesulfonic acid) or another Lewis or Bronsted acid or base catalyst.

The first ethylene polymer is an ethylene polymer having a density less than 0.90 grams/cubic-centimeter and a polydispersity index less than 3.

The second ethylene polymer, as that term is used herein, is (1) a homopolymer of ethylene or a copolymer of ethylene and a minor proportion of one or more alpha-olefins having 3 to 12 carbon atoms, and optionally, a diene, and (2) modified with an unsaturated aliphatic diacid anhydride. Examples of the alpha-olefins are propylene, 1-butene, 1-hexene, 4-methyl-1-pentene, and 1-octene. When the second ethylene polymer is a copolymer of ethylene and one or more alpha-olefins, the alpha-olefins preferably have 4 to 8 carbon atoms. The second ethylene polymer can also be a mixture or blend of such homopolymers and copolymers. The mixture can be a mechanical blend or an in situ blend. Preferably, the second ethylene polymer is modified with the unsaturated aliphatic diacid anhydride via grafting or copolymerization.

The second ethylene polymer can have a density less than 0.95 grams per cubic centimeter and a melt index in the range of 0.1 to 50 grams per 10 minutes.

The ethylene polymer, without regard to whether the term refers to the first or second ethylene polymer, can be homogeneous or heterogeneous. The homogeneous t ethylene polymers usually have a polydispersity (Mw/Mn) in the range of 1.5 to 3.5 and an essentially uniform comonomer distribution, and are characterized by a single and relatively low melting point as measured by a differential scanning calorimeter. The heterogeneous ethylene polymers usually have a polydispersity (Mw/Mn) greater than 3.5 and lack a uniform comonomer distribution. Mw is defined as weight average molecular weight, and Mn is defined as number average molecular weight.

Low- or high-pressure processes can produce the first or second ethylene polymers. They can be produced in gas phase processes or in liquid phase processes (that is, solution or slurry processes) by conventional techniques. Low-pressure processes are typically run at pressures below 7 MPa (1000 pounds per square inch ("psi")) whereas high-pressure processes are typically run at pressures above 105 MPa (15,000 psi).

Typical catalyst systems for preparing these ethylene polymers include magnesium/titanium-based catalyst systems, vanadium-based catalyst systems, chromium-based catalyst systems, metallocene catalyst systems, and other transition metal catalyst systems. Many of these catalyst systems are often referred to as Ziegler-Natta catalyst systems or Phillips catalyst systems. Useful catalyst systems include catalysts using chromium or molybdenum oxides on silica-alumina supports.

Useful ethylene polymers include low density homopolymers of ethylene made by high pressure processes (HP-LDPEs), linear low density polyethylenes (LLDPEs), very low density polyethylenes (VLDPEs), ultra low density polyethylenes (ULDPEs), medium density polyethylenes (MDPEs), high density polyethylene (HDPE), and metallocene copolymers.

High-pressure processes are typically free radical initiated polymerizations and conducted in a tubular reactor or a stirred autoclave. In the tubular reactor, the pressure is within the range of 175 to 315 MPa (25,000 to 45,000 psi) and the temperature is in the range of 200 to 350 degrees Celsius. In the stirred autoclave, the pressure is in the range of 70 to 210 MPa (10,000 to 30,000 psi)and the temperature is in the range of 175 to 250 degrees Celsius.

The VLDPE or ULDPE can be a copolymer of ethylene and one or more alpha-olefins having 3 to 12 carbon atoms and preferably 3 to 8 carbon atoms. The density of the VLDPE or ULDPE can be in the range of 0.870 to 0.915 gram per cubic centimeter. The melt index of the VLDPE or ULDPE can be in the range of 0.1 to 20 grams per 10 minutes and is preferably in the range of 0.3 to 5 grams per. 10 minutes. The portion of the VLDPE or ULDPE attributed to the comonomer(s), other than ethylene, can be in the range of 1 to 49 percent by weight based on the weight of the copolymer and is preferably in the range of 15 to 40 percent by weight.

A third comonomer can be included, for example, another alpha-olefin or a diene such as ethylidene norbornene, butadiene, 1,4-hexadiene, or a dicyclopentadiene. Ethylene/propylene copolymers are generally referred to as EPRs and ethylene/propylene/diene terpolymers are generally referred to as an EPDM. The third comonomer can be present in an amount of 1 to 15 percent by weight based on the weight of the copolymer and is preferably present in an amount of 1 to 10 percent by weight. It is preferred that the copolymer contains two or three comonomers inclusive of ethylene.

The LLDPE can include VLDPE, ULDPE, and MDPE, which are also linear, but, generally, has a density in the range of 0.916 to 0.925 gram per cubic centimeter. It can be a copolymer of ethylene and one or more alpha-olefins having 3 to 12 carbon atoms, and preferably 3 to 8 carbon atoms. The melt index can be in the range of 1 to 20 grams per 10 minutes, and is preferably in the range of 3 grams per 10 minutes to 8 grams per 10 minutes.

Preferably, the total polymer content, based upon the first and second ethylene polymers, is in the range of 1 weight percent to 35 weight percent.

Preferably, the flame retardant is a metal hydrate and present in an amount between 50 weight percent and 75 weight percent. Useful metal hydrates include aluminum trihydroxide (also known as ATH or aluminum trihydrate) and magnesium dihydroxide (also known as magnesium hydroxide). Other flame-retarding metal hydroxides are known to persons of ordinary skill in the art. The use of those metal hydroxides is considered within the scope of the present invention.

The surface of the metal hydroxide may be coated with one or more materials, including silanes, titanates, zirconates, carboxylic acids, and maleic anhydride-grafted polymers. The average particle size may range from less than 0.1 micrometers to 50 micrometers. In some cases, it may be desirable to use a metal hydroxide having a nano-scale particle size. The metal hydroxide may be naturally occurring or synthetic.

The flame-retardant composition may contain other flame-retardant additives. Other suitable non-halogenated flame retardant additives include calcium carbonated, red phosphorus, silica, alumina, titanium oxides, talc, clay, organo-modified clay, zinc borate, antimony trioxide, wollastonite, mica, magadiite, organo-modified magadiite, silicone polymers, phosphate esters, hindered amine stabilizers, ammonium octamolybdate, intumescent compounds, and expandable graphite. Suitable halogenated flame retardant additives include decabromodiphenyl oxide, decabromodiphenyl ethane, ethylene-bis (tetrabromophthalimide), and 1,4:7,10-Dimethanodibenzo(a,e)cyclooctene, 1,2,3,4,7,8,9,10,13,13,14,14-dodecachloro-1,4,4a,5,6,7,10,10a,11,12,12a-dodecahydro-).

Suitable ultra high molecular weight polysiloxanes have an ultra-high molecular weight, as indicated by very high viscosities. The viscosities of the ultra-high polysiloxane are greater than 1,000,000 centistokes at room temperature, and preferably above 5,000,000 centistokes, and most preferably above 10,000,000 centistokes. Preferably, the polysiloxane is present in an amount between 0.2 weight percent and 15 weight percent. Preferably, the polysiloxane is a polydimethylsiloxane, which may be terminated with various end groups, including methyl (in the case of a trimethylsiloxy end group) or vinyl (in the case of a vinyl dimethylsiloxy end group). Although not required, it is advantageous from a material-handling standpoint to add the ultra high molecular weight polysiloxane as a concentrate (masterbatch) in a polyethylene or other polymer carrier.

In addition, the composition may contain other additives such as antioxidants, stabilizers, blowing agents, carbon black, pigments, processing aids, peroxides, cure boosters, and surface active agents to treat fillers may be present Furthermore, the composition may be thermoplastic or crosslinked.

In a preferred embodiment, the flame retardant composition has a Limiting Oxygen Index ("LOI") of at least 37.

In another embodiment of the present invention, a variety of methods for preparing suitable wire-and-cable constructions are contemplated and would be readily apparent to persons of ordinary skill in the art. For example, conventional extrusion processes may be used to prepare a flame-retardant wire or cable construction by applying the flame retardant composition as a coating over a wire or a cable.

Suitable wire-and-cable constructions, which may be made by applying the coating over a wire or a cable, include: (a) insulation and jacketing for copper telephone cable, coaxial cable, and medium and low voltage power cable and (b) fiber optic buffer and core tubes. Other examples of suitable wire-and-cable constructions are described in ELECTRIC WIRE HANDBOOK (J. Gillett & M. Suba, eds., 1983) and POWER AND COMMUNICATION CABLES THEORY AND APPLICATIONS (R. Bartnikas & K. Srivastava eds., 2000). Moreover, additional examples of suitable wire-and-cable constructions would be readily apparent to persons of ordinary skill in the art. Any of these constructions can be advantageously coated with a composition of the present invention.

In another embodiment of the present invention, the invention is a cable comprising one or more electrical conductors or communication media, or a core of two or more electrical conductors or communication media, each electrical conductor, communication medium, or core being surrounded by a flame retardant composition comprising (a) a first ethylene polymer having a density less than 0.90 grams/cubic-centimeter and a polydispersity index less than 3; (b) a second ethylene polymer having a density less than 0.95 grams/cubic centimeter and being modified with an unsaturated aliphatic diacid anhydride; (c) a flame retardant; and (d) an ultra high molecular weight polysiloxane.

In yet another embodiment of the present invention, the present invention is an article of manufacture made from or containing a flame retardant composition comprising (a) a first ethylene polymer having a density less than 0.90 grams/cubic-centimeter and a polydispersity index less than 3; (b) a second ethylene polymer having a density less than 0.95 grams/cubic centimeter and being modified with an unsaturated aliphatic diacid anhydride; (c) a flame retardant; and (d) an ultra high molecular weight polysiloxane. Preferably, the article is selected from the group consisting of extruded sheets, thermoformed sheets, injection-molded articles, coated fabrics, construction materials, and automotive materials.

### EXAMPLES

The following non-limiting examples illustrate the invention.

All of the exemplified compounds were prepared with blends of ethylene polymers and contained (a) 10 weight percent of DEFA-1373 very low density ethylene/butene copolymer, having a 0.3 weight percent maleic anhydride graft, a density of 0.899 grams/cubic-centimeters, and a melt index of 3.3 grams/ 10 minutes, (b) 0.20 weight percent of distearyl-3-3-thiodiproprionate, available from Great Lakes Chemical Corporation, and (c) 0.20 weight percent of Irganox 1010^{™} tetrakis [methylene (3,5-di-tert-butyl-4-hydroxyhydro-cinnamate)] methane. Irganox 1010 is available from Ciba Specialty Chemicals Inc.

The polymers used in the exemplified compounds include (a) an ethylene vinylacetate copolymer contained 28 percent vinyl acetate by weight and had a melt index of 6.grams/10min ("EVA-1"); (b) an ethylene vinylacetate copolymer contained 9 percent vinyl acetate by weight and bad a melt index of 2 grams/10min ("EVA-2"); (c) Attane 4404^{™} polyethylene; and (d) Affinity EG-8200^{™} polyethylene. Attane 4404^{™} polyethylene is an ethylene/octene copolymer with a melt index of 4.0 grams/10 minutes, a density of 0.904 grams/cubic centimeter, a peak DSC melting point of 124 degrees Celsius, and a polydispersity index greater than 3. Affinity EG-8200^{™} polyethylene is an ethylene/octene copolymer with a melt index of 5.0 grams/10 minutes, a density 0.87 grams/ cubic centimeter, and a polydispersity index of less than 3. Both 4404^{™} polyethylene and Affinity EG-8200^{™} polyethylene are available from The Dow Chemical Company.

The mixtures of the compounds were prepared in a 260-cubic centimeter Brabender mixer at a maximum melt temperature of 175 degrees Celsius. Af3er mixing, the compounds were compression molded into 0.318 cm (0.125-inch) plaques for LOI or UL-94 Vertical Burn tests. An UL-94 rating of V0 is the best rating possible and indicates that a material self extinguishes quickly without releasing flaming drops while burning. For trouser tear, tensile strength, and elongation tests, the mixtures were either compression molded into plaques or extruded into tapes.

For the exemplified materials containing ultra high molecular weight polydimethylsiloxane, the polydimethylsiloxane concentration is half of the amount indicated in the Tables. The ultra high molecular weight polydimethylsiloxane was added as part of a 50 percent masterbatch wherein the diluent is a low density polyethylene, available from Dow Corning Corporation as MB 50-002^{™} Masterbatch. The polydimethylsiloxane was a vinyl-terminated polydimethylsiloxane with>15 million centistokes.

### Comparative Examples 1-5: Without Ultra High Molecular Weight Polysiloxane

Comparative Examples 1-5 were prepared to a total polymer content of 37.60 weight percent, including the DEFA-1373 very low density polyethylene. Each exemplified compound also contained 62.0 weight percent of aluminum trihydroxide.

Comparative Examples 1-5 were evaluated for certain physical and mechanical properties as well as flame retardance. The results of those evaluations are reported in Table I. For trouser tear, tensile strength, and elongation tests, the mixtures were extruded into 0.00508 cm (0.02-inch) thick tapes.

**Table I**

| Component/Property | Comp. Ex. 1 | Comp. Ex. 2 | Comp.Ex.3 | Comp. Ex. 4 | Comp.Ex.5 |
|---|---|---|---|---|---|
| EVA-1 | 22.60 | 13.80 | | | |
| EvA-2 | 5.00 | | | | |
| Attane 4404^{™} PE | | 13.80 | 13.80 | | 27.60 |
| Affinity EG-8200^{™} PE | | | 13.80 | 27.60 | |
| Trouser tear (N/mm) ((pounds-f/inch)) | 4.73 (27) | 5.08 (29) | 8.41 (48) | 16.29 (93) | 12.26 (70) |
| Tensile Strength (MPa) ((psi)) | 11.06 (1580) | 10.67 (1523) | 12.67 (1810) | 11.09 (1584) | 13.76 (1965) |
| Elongation (%) | 146 | 149 | 163 | 283 | 267 |
| LOI (%) | 34 | 34 | 34 | 31 | 32 |
| Hot Deformation % @ 90 degrees Celsius (method2) | 5 | 2 | 2 | 44 | 0 |
| Viscosity @ 175 degrees Celsius/200s-1 | 1540 | 1650 | 1875 | 1860 | 1920 |
| Viscosity @ 175 degrees Celsius/1000s-1 | 545 | 520 | 525 | 605 | 505 |
| UL-94 Vertical Burn Rating | none | none | none | none | none |

### Comparative Examples 6 - 9 and Examples 10 - 14

For trouser tear, tensile strength, and elongation tests, the exemplified compounds for Comparative Examples 6-9 and Examples 10-14 were extruded into 0.00508 cm (0.02-inch) thick tapes. The extruded tapes were prepared at 179 degrees Celsius and an extruder rate of 25 rpm. The breaker plate pressure varied for the samples and is reported in Table II.

These samples were also evaluated for certain mechanical properties and flame retardance. The results of those evaluations are also reported in Table II.

**Table II**

| Component/Property | Comp. Ex. 6 | Comp. Ex. 7 | Comp.Ex.8 | Comp. Ex. 9 | Ex.10 | Ex. 11 | Ex. 12 | Ex. 13 | Ex. 14 |
|---|---|---|---|---|---|---|---|---|---|
| Attane 4404^{™} PE | 13.80 | 12.80 | 11.61 | 12.61 | 11.61 | 10.61 | 11.61 | 12.80 | 11.80 |
| Affinity EG-8200^{™} PE | 13.80 | 12.80 | 11.61 | 12.61 | 11.61 | 10.61 | 11.61 | 12,80 | 11.80 |
| Aluminum trihydroxide | 62.00 | 64.00 | 64.00 | 64.00 | 64.00 | 51.20 | 62.00 | 64.00 | 64.00 |
| Magnesium hydroxide | | | | | | 12.80 | | | |
| Zinc borate | | | 2.00 | | | 2.00 | 2.00 | | |
| Stearic acid | | | 0.38 | 0.38 | 0.38 | 0.38 | 0.38 | | |
| Ultra high molecular weight polydimethylsiloxane | | | | | 2.00 | 2.00 | 2.00 | | 2.00 |
| Breaker Plate Pressure (MPa) ((psi)) | 63.7 (9100) | 67.9 (9700) | 67.9 (9700) | 63 (9000) | 40.6 (5800) | 40.6 (5800) | 36.4 (5200) | | |
| Trouser tear (N/mm) ((pounds-f/inch)) | 7.9 (45) | 6.1 (35) | 5.8 (33) | 6.8 (39) | 6.0 (84) | 4.4 (25) | 4.9 (28) | 6.1 (35) | 5.8 (33) |
| Tensile Strength (MPa) (psi) | 12.8 (1835) | 15.1 (2158) | 11.5 (1646) | 12.2 (1742) | 12.6 (1797) | 12.2 (1745) | 12.16 (1737) | 15.1 (2158) | 15.3 (2192) |
| Elongation (%) | 284 | 243 | 179 | 245 | 233 | 193 | 245 | 245 | 242 |
| LOI (%) | 33 | 34 | 36 | 34 | 38 | 39 | 43 | 34 | 38 |
| Viscosity@175°C/200s-1 | | | | | | | | 1830 | 1110 |
| Viscosity @175°C/1000s-1 | | | | | | | | 500 | 310 |
| UL-94 Vertical Burn Rating | none | none | V0 | V1 | V0 | V0 | V1 | none | V1 |

### Comparative Examples 15-18 and Examples 19 and 20

In additional to the previously described components and the components identified in Table III, each exemplified compounds for Comparative Examples 15-18 and Examples 19 and 20 contained 0.38 weight percent of stearic acid and 64.00 weight percent of aluminum trihydroxide. The evaluated silicone-containing materials included Dow Corning Corporation 4-7081^{™} Resin Modifier and Crompton L45 60K silicone fluid. DC 4-7081 was a silicone gum, which Dow Corning Corporation describes as a powdered siloxane with methacrylate functionality. Crompton L45 60K is a polydimethylsiloxane, having 60,000 centistokes and available from Crompton Corporation.

For trouser tear, tensile strength, and elongation tests, the exemplified compounds were prepared into 0.1905 cm (0.075-inch) compression molded plaques. These exemplified compounds were evaluated for certain mechanical and physical properties and flame retardance, which results are reported in Table III.

**Table III**

| Component/Property | Comp. Ex. 15 | Comp. Ex. 16 | Comp. Ex. 17 | Comp. Ex. 18 | Ex. 19 | Ex. 20 |
|---|---|---|---|---|---|---|
| Attane 4404^{™} PE | 12.11 | 12.36 | 12.11 | 12.36 | 11.61 | 12.11 |
| Affinity EG-8200^{™} PE | 12.11 | 12.36 | 12.11 | 12.36 | 11.61 | 12.11 |
| Ultra high molecular weight polydimethylsiloxane | | | | | 2.00 | 1.00 |
| 4-7081^{™} Resin Modifier | 1.00 | 0.50 | | | | |
| L45 60K^{™} silicone fluid | | | 1.00 | 0.50 | | |
| Trouser tear (N/mm) ((pounds-f/inch)) | 7.4 (42) | 8.6 (49) | 6.8 (39) | 7.9 (45) | 8.8 (50) | 7.9 (45) |
| Tensile Strength (MPa) ((psi)) | 12.09 (1727) | 10.54 (1506) | 11.89 (1698) | 8.83 (1262) | 11.77 (1681) | 12.47 (1782) |
| Elongation (%) | 177 | 102 | 192 | 55 | 178 | 196 |
| LOI (%) | 36 | 38 | 42 | 37 | 39 | 36 |
| Viscosity @175°C/200s-1 | 1630 | 1695 | 1410 | 1632 | 1220 | 1450 |
| Viscosity @175°C/1000s-1 | 353 | 371 | 366 | 382 | 291 | 333 |
| UL-94 Vertical Burn Rating | V-0 | V-0 | V-0 | V-0 | V-0 | V-0 |

## Claims

1. A polymeric composition comprising:
(a) a first ethylene polymer having a density less than 0.90 grams/cubic-centimeter and a polydispersity index less than 3;
(b) a second ethylene polymer having a density less than 0.95 grams/cubic centimeter and being modified with an unsaturated aliphatic diacid anhydride;
(c) a flame retardant; and
(d) an ultra high molecular weight polysiloxane.

2. The polymeric composition of Claim 1 wherein the first ethylene polymer is selected from the group consisting of ethylene homopolymers, ethylene/alpha-olefin copolymers, ethylene/unsaturated ester copolymers, and ethylene/vinyl silane copolymers.

3. The polymeric composition of Claim 1 wherein the second ethylene polymer , being modified via grafting or copolymerization.

4. The polymeric composition of Claim 1 wherein the second ethylene polymer before modification is selected from the group consisting of ethylene homopolymers and ethylenelalpha-olefin copolymers.

5. The polymeric composition of Claim 1 wherein the flame retardant being a metal hydrate.

6. The polymeric composition of Claim 5 wherein the metal hydrate is selected from the group consisting of aluminum trihydroxide and magnesium dihydroxide.

7. The polymeric composition of Claim 5 wherein the metal hydrate being present in amount from 50 to 75 weight percent.

8. The polymeric composition of Claim 1 wherein the polysiloxane being a polydimethylsiloxane.

9. The polymeric composition of Claims 1 - 8 wherein the composition having a Limiting Oxygen Index ("LOI'') of at least 37.

10. A cable comprising one or more electrical conductors or communication media, or a core of two or more electrical conductors or communication media, each electrical conductor, communication medium, or core being surrounded by a flame retardant composition comprising:
(a) a first ethylene polymer having a density less than 0.90 grams/cubic-centimeter and a polydispersity index less than 3;
(b) a second ethylene polymer having a density less than 0.95 grams/cubic centimeter and being modified with an unsaturated aliphatic diacid anhydride;
(c) a flame retardant; and
(d) an ultra high molecular weight polysiloxane.

11. The cable of Claim 10 wherein the first ethylene polymer is selected from the group consisting of ethylene homopolymers, ethylene/alpha-olefin copolymers, ethylene/unsaturated ester copolymers, and ethylene/vinyl silane copolymers.

12. The cable of Claim 10 wherein the second ethylene polymer being modified via grafting or copolymerization.

13. The cable of Claim 10 wherein the second ethylene polymer before modification is selected from the group consisting of ethylene homopolymers and ethylene/alpha-olefin copolymers.

14. The cable of Claim 10 wherein the flame retardant being a metal hydrate.

15. The cable of Claim 14 wherein the metal hydrate is selected from the group consisting of aluminum trihydroxide and magnesium dihydroxide.

16. The cable of Claim 14 wherein the metal hydrate being present in amount from 50 to 75 weight percent based on said composition.

17. The cable of Claim 10 wherein the polysiloxane being a polydimethylsiloxane.

18. The cable of Claims 10 - 17 wherein the flame retardant composition having a Limiting Oxygen Index ("LOI") of at least 37.

19. An article of manufacture made from or containing a flame retardant composition comprising:
(a) a first ethylene polymer having a density less than 0.90 grams/cubic-centimeter and a polydispersity index less than 3;
(b) a second ethylene polymer having a density less than 0.95 grams/cubic centimeter and being modified with an unsaturated aliphatic diacid anhydride;
(c) a flame retardant; and
(d) an ultra high molecular weight polysiloxane.

20. The article of Claim 19 wherein the article is selected from the group consisting of extended or thermoformed sheets, injection-molded articles, coated fabrics, construction materials, and automotive materials.

## Patentansprüche

1. Polymere Zusammensetzung, umfassend:
(a) ein erstes Ethylenpolymer mit einer Dichte von weniger als 0,90 g/cm³ und einem Polydispersitätsindex von weniger als 3;
(b) ein zweites Ethylenpolymer mit einer Dichte von weniger als 0,95 g/cm³ und modifiziert mit einem ungesättigten, aliphatischen Disäureanhydrid;
(c) ein Flammschutzmittel; und
(d) ein uttrahochmolelculares Polysiloxan.

2. Polymere Zusammensetzung nach Anspruch 1, wobei das erste Ethylenpolymer ausgewählt ist aus der Gruppe bestehend aus Ethylen-Homopolymeren, Ethylen/alpha-Olefin-Copolymeren, Ethylen/ungesättigten Ester-Copolymeren und EthylenNinylsilan-Copolymeren.

3. Polymere Zusammensetzung nach Anspruch 1, wobei das zweite Ethylenpolymer über Pfropfung oder Copolymerisation modifiziert ist.

4. Polymere Zusammensetzung nach Anspruch 1, wobei das zweite Ethylenpolymer vor Modifizierung ausgewählt ist aus der Gruppe bestehend aus Ethylen-Homopolymeren und Ethylen/alpha-Olefin-Copolymeren.

5. Polymere Zusammensetzung nach Anspruch 1, wobei das Flammschutzmittel ein Metallhydrat ist.

6. Polymere Zusammensetzung nach Anspruch 5, wobei das Metallhydrat ausgewählt ist aus der Gruppe bestehend aus Aluminiumtrihydroxid und Magnesiumdihydroxid.

7. Polymere Zusammensetzung nach Anspruch 5, wobei das Metallhydrat in einer Menge von 50 bis 75 Gew.-% vorhanden ist.

8. Polymere Zusammensetzung nach Anspruch 1, wobei das Polysiloxan ein Polydimethylsiloxan ist.

9. Polymere Zusammensetzung nach den Ansprüchen 1 bis 8, wobei die Zusammensetzung einen Sauerstoffindex ("LOI") von mindestens 37 aufweist.

10. Kabel, umfassend ein(en) oder mehrere elektrische Leiter oder Übertragungsmedien oder eine Seele von zwei oder mehr elektrischen Leitern oder Übertragungsmedien, wobei der elektrische Leiter, das Übertragungsmedium oder die Seele jeweils von einer flammhemmenden Zusammensetzung umgeben ist, die umfasst:
(a) ein erstes Ethylenpolymer mit einer Dichte von weniger als 0,90 g/cm³ und einem Polydispersitätsindex von weniger als 3;
(b) ein zweites Ethylenpolymer mit einer Dichte von weniger als 0,95 g/cm³ und modifiziert mit einem ungesättigten, aliphatischen Disäureanhydrid;
(c) ein Flammschutzmittel; und
(d) ein ultrahochmolekulares Polysiloxan,

11. Kabel nach Anspruch 10, wobei das erste Ethylenpolymer ausgewählt ist aus der Gruppe bestehend aus Ethylen-Homopolymeren, Ethylenlalpha-Olefin-Copolymeren, Ethylen/ungesättigten Ester-Copolymeren und EthylenNinylsilan-Copolymeren.

12. Kabel nach Anspruch 10, wobei das zweite Ethylenpolymer über Pfropfung oder Copolymerisation modifiziert ist.

13. Kabel nach Anspruch 10, wobei das zweite Ethylenpolymer vor Modifizierung ausgewählt ist aus der Gruppe bestehend aus Ethylen-Homopolymeren und Ethylen/alpha-Olefin-Copolymeren.

14. Kabel nach Anspruch 10, wobei das Flammschutzmittel ein Metallhydrat ist.

15. Kabel nach Anspruch 14, wobei das Metallhydrat ausgewählt ist aus der Gruppe bestehend aus Aluminiumtrihydroxid und Magnesiumdihydroxid.

16. Kabel nach Anspruch 14, wobei das Metallhydrat in einer Menge von 50 bis 75 Gew.-%, bezogen auf die Zusammensetzung, vorhanden ist.

17. Kabel nach Anspruch 10, wobei das Polysiloxan ein Polydimethylsiloxan ist.

18. Kabel nach den Ansprüchen 10 bis 17, wobei die flammhemmende Zusammensetzung einen Sauerstoffindex ("LOI") von mindestens 37 aufweist.

19. Erzeugnis aus einer flammhemmenden Zusammensetzung oder diese enthaltend, umfassend:
(a) ein erstes Ethylenpolymer mit einer Dichte von weniger als 0,90 g/cm³ und einem Polydispersitätsindex von weniger als 3;
(b) ein zweites Ethylenpolymer mit einer Dichte von weniger als 0,95 g/cm³ und modifiziert mit einem ungesättigten, aliphatischen Disäureanhydrid;
(c) ein Flammschutzmittel; und
(d) ein ultrahochmolekulares Polysiloxan.

20. Erzeugnis nach Anspruch 19, wobei das Erzeugnis ausgewählt ist aus der Gruppe bestehend aus gestreckten oder warmgeformten Folien/Platten, Spritzgussartikeln, beschichtetem Gewebe, Konstruktionsmaterialien und Automobilmaterialien.

## Revendications

1. Composition de polymères, comprenant :
a) un premier polymère d'éthylène, qui présente une masse volumique inférieure à 0,90 g/cm³ et un indice de polydispersité inférieur à 3 ;
b) un deuxième polymère d'éthylène, qui présente une masse volumique inférieure à 0,95 g/cm³ et qui a été modifié avec un anhydride de diacide aliphatique insaturé ;
c) un agent ignifugeant ;
d) et un polysiloxane à poids moléculaire ultra-haut.

2. Composition de polymères, conforme à la revendication 1, dans laquelle le premier polymère d'éthylène est choisi dans l'ensemble formé par les homopolymères d'éthylène, les copolymères d'éthylène et d'alpha-oléfine, les copolymères d'éthylène et d'ester insaturé, et les copolymères d'éthylène et de vinyl-silane.

3. Composition de polymères, conforme à la revendication 1, dans laquelle le deuxième polymère d'éthylène a été modifié par greffage ou copolymérisation.

4. Composition de polymères, conforme à la revendication 1, dans laquelle le deuxième polymère d'éthylène, avant d'être modifié, est choisi dans l'ensemble formé par les homopolymères d'éthylène et les copolymères d'éthylène et d'alpha-oléfine.

5. Composition de polymères, conforme à la revendication 1, dans laquelle l'agent ignifugeant est un hydroxyde de métal.

6. Composition de polymères, conforme à la revendication 5, dans laquelle l'hydroxyde de métal est choisi parmi le trihydroxyde d'aluminium et le dihydroxyde de magnésium.

7. Composition de polymères, conforme à la revendication 5, dans laquelle l'hydroxyde de métal se trouve en une proportion pondérale de 50 à 75 %.

8. Composition de polymères, conforme à la revendication 1, dans laquelle le polysiloxane est un polydiméthylsiloxane.

9. Composition de polymères, conforme à l'une des revendications 1 à 8, laquelle composition présente un indice limite d'oxygène (LOI) d'au moins 7.

10. Câble comprenant un ou plusieurs conducteurs électriques ou supports de communication, ou une âme formée de deux conducteurs électriques ou supports de communication ou plus, chacun de ces conducteurs électriques ou supports de communication ou cette âme étant enrobé d'une composition ignifugeante comprenant :
a) un premier polymère d'éthylène, qui présente une masse volumique inférieure à 0,90 g/cm³ et un indice de polydispersité inférieur à 3 ;
b) un deuxième polymère d'éthylène, qui présente une masse volumique inférieure à 0,95 g/cm³ et qui a été modifié avec un anhydride de diacide aliphatique insaturé ;
c) un agent ignifugeant ;
d) et un polysiloxane à poids moléculaire ultra-haut.

11. Câble conforme à la revendication 10, dans lequel le premier polymère d'éthylène est choisi dans l'ensemble formé par les homopolymères d'éthylène, les copolymères d'éthylène et d'alpha-oléfine, les copolymères d'éthylène et d'ester insaturé, et les copolymères d'éthylène et de vinyl-silane.

12. Câble conforme à la revendication 10, dans lequel le deuxième polymère d'éthylène a été modifié par greffage ou copolymérisation.

13. Câble conforme à la revendication 10, dans lequel le deuxième polymère d'éthylène, avant d'être modifié, est choisi dans l'ensemble formé par les homopolymères d'éthylène et les copolymères d'éthylène et d'alpha-oléfine.

14. Câble conforme à la revendication 10, dans lequel l'agent ignifugeant est un hydroxyde de métal.

15. Câble conforme à la revendication 14, dans lequel l'hydroxyde de métal est choisi parmi le trihydroxyde d'aluminium et le dihydroxyde de magnésium.

16. Câble conforme à la revendication 14, dans lequel l'hydroxyde de métal se trouve en une quantité représentant 50 à 75 % du poids de ladite composition.

17. Câble conforme à la revendication 10, dans lequel le polysiloxane est un polydiméthylsiloxane.

18. Câble conforme à l'une des revendications 10 à 17, dans lequel la composition ignifugeante présente un indice limite d'oxygène (LOI) d'au moins 37.

19. Article de fabrication, fait d'une composition ignifugeante ou contenant une composition ignifugeante, laquelle composition comprend :
a) un premier polymère d'éthylène, qui présente une masse volumique inférieure à 0,90 g/cm³ et un indice de polydispersité inférieur à 3 ;
b) un deuxième polymère d'éthylène, qui présente une masse volumique inférieure à 0,95 g/cm³ et qui a été modifié avec un anhydride de diacide aliphatique insaturé ;
c) un agent ignifugeant ;
d) et un polysiloxane à poids moléculaire ultra-haut.

20. Article conforme à la revendication 19, lequel article est choisi dans l'ensemble formé par les feuilles étirées ou thermoformées, les articles moulés par injection, les tissus enduits, les matériaux de construction et les matériaux pour automobiles.
